## Europäisches Patentamt
## European Patent Office
### Office européen des brevets

(11) Veröffentlichungsnummer: **0 366 103**
**A2**

(12) **EUROPÄISCHE PATENTANMELDUNG**

(21) Anmeldenummer: **89119788.1**

(51) Int. Cl.⁵: **E21D 20/02**

(22) Anmeldetag: **25.10.89**

(30) Priorität: **26.10.88 JP 269949/88**

(43) Veröffentlichungstag der Anmeldung:
**02.05.90 Patentblatt 90/18**

(84) Benannte Vertragsstaaten:
**AT BE CH DE ES FR GB GR IT LI LU NL SE**

(71) Anmelder: **ISM INTERNATIONAL INC.**
**4-9, 2-chome Shintomi Chuo-ku**
**Tokyo(JP)**

(72) Erfinder: **Hiraoka, Noboru**
**4-9, 2-chome Shintomi Chuo-ku**
**Tokyo(JP)**

(74) Vertreter: **Rackette, Karl, Dipl.-Phys. Dr.-Ing**
**Kaiser-Joseph-Strasse 179 Postfach 1310**
**D-7800 Freiburg(DE)**

(54) **Befestigungsmaterial zum Befestigen von Fundamentankern.**

(57) Die Erfindung verwendet als Befestigungsmaterial zum Befestigen von Fundamenten einen Hauptagens aus reaktivem warmhärtbaren Harz sowie ein von diesem Hauptagens getrennt abgefülltes Härtungsmittel und einen Betonzuschlag, wobei als Betonzuschlag das Härtungsprodukt des warmhärtbaren Harzes zum Einsatz kommt.

EP 0 366 103 A2

## Befestigungsmaterial zum Befestigen von Fundamentankern

Die Erfindung betrifft ein Befestigungsmaterial zum Befestigen von Fundamentankern, um Ankerschrauben, Armierungseisen, Grubenstempel u. dgl. in Betonkörpern, Fundamenten, Felsen etc. zu befestigen.

Ankerschrauben, Stempel und dergleichen - nachstehend Fundamentanker genannt - dienen dazu, Konstruktionen, Maschinen, diverse Vorrichtungen, provisorische Materialien usw. in Betonkörpern, Fundamenten, Fels etc. - nachstehend Fundamente genannt - zu befestigen. Als Methode zum Befestigen des Fundamentankers im Fundament ist ein Verfahren bekannt, den Fundamentanker dadurch zu befestigen, daß man in ein in das Fundament gebohrtes Montageloch den Fundamentanker einsteckt, in den Spalt zwischen Montageloch und Fundamentanker ein reaktives Harzmaterial enthaltendes Befestigungsmaterial füllt und dieses reagieren und härten läßt. Als Befestigungsmaterial zum Befestigen dieses Fundamentankers wurde vielfach solches gebraucht, das aus einem Hauptagens aus warmhärtbarem Harz, einem von diesem Hauptagens getrennt abgefüllten Härtungsmittel und einem Betonzuschlag bestand, und als Betonzuschlag wurden üblicherweise Sand oder Pulver natürlicher oder künstlicher Steine oder Glasfasern, Glasperlen etc. verwendet.

Das wie oben besprochen aus Hauptagens, Härtungsmittel und Betonzuschlag bestehende Befestigungsmaterial zum Befestigen von Fundamentankern ist in Kapselbehältern eingeschlossen, während das Härtungsmittel nochmals von einem besonderen Behälter aufgenommen wird und in vom Hauptagens getrenntem Zustand eingefüllt ist. Bei Verwendung steckt man den Behälter, in dem das Befestigungsmaterial eingeschlossen ist, in das Montageloch des Fundaments, schlägt hier den Fundamentanker ein und zerstört dadurch den Behälter, wodurch man auch den Härtungsmittel-Behälter zerstört, läßt das Hauptagens mit dem Härtungsmittel reagieren, wodurch das warmhärtbare Harz, welches das Hauptagens ist, härtet, und befestigt hierdurch den Fundamentanker.

Da das vorbeschriebene Verfahren zum Befestigen von Fundamentankern es ermöglicht, Fundamentanker mit hoher Präzision zu verankern, eine sehr gute Haftfestigkeit erwarten läßt und darüber hinaus eine große Verkürzung der Gewerkzeit mit sich bringt, haben sich im Bereich des Hoch- und Tiefbaus zahlreiche Anwendungsfälle ergeben. So ist der Fundamentanker im Falle von Tiefbauarbeiten beispielsweise für die Brückenpfeilergründung, für die Befestigung der Stahlbrückenbasis, für Verschalungsstützen usw., oder im Hochbau für die Verteiler von Radlaufschienen an der Außenseite von Lagerhäusern, bei der Stützlagerung von Fußbodendielen, bei der Montage von Firmenschildern an Gebäudefassaden usw. in weitem Umfange in Anwendung gekommen.

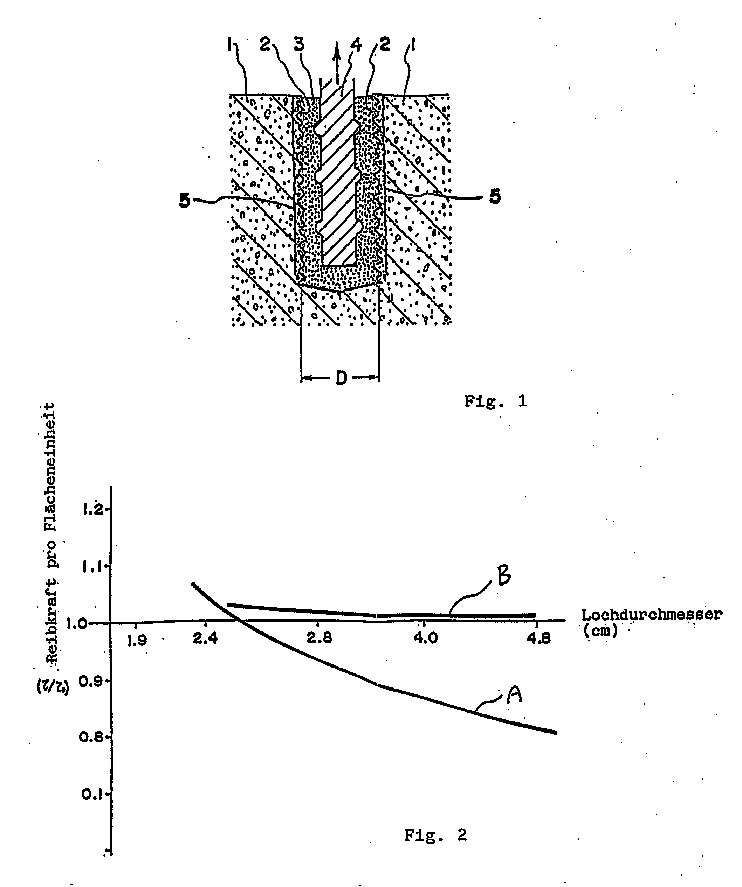

Die Erfindung beabsichtigt die nachfolgend erörterten Problempunkte zu lösen. Auf Grund des vorbeschriebenen bisherigen Standes der Technik hatte man geglaubt, daß der Ausreißwiderstand (Preßdruckwiderstand) des entsprechend Figur 1 durch Befestigungsmittel 3 aus reaktivem Harzmaterial im Montageloch 2 des Fundaments 1 befestigten Fundamentankers 4 in dem Falle, daß Fundamentanker 4 einen ausreichenden Widerstand bewahrt, desto größer ist, je größer Durchmesser (D) oder Tiefe (L) des Montagelochs 2 sind und im allgemeinen der Seitenwandfläche $\pi$ DL oder der Projektionsfläche $\pi$ D (L + 2D) dieses Montagelochs proportional sind, m. a. W. im wesentlichen proportional zum Durchmesser D oder zur Tiefe L zunimmt.

Bei den tatsächlichen Arbeiten hatte man nun aber das Problem, daß auch bei größerem Durchmesser D des Montagelochs der Ausreißwiderstand nicht proportional zu Durchmesser D zunahm und Unfälle, daß Fundamentanker, die nach den Ausmaßen des Durchmessers ausreichend hätten halten müssen, sich lösten. Es wird angenommen, daß dieser Umstand von einem den Durchmesser D des Montagelochs betreffenden negativen Maßeffekt gegenüber dem Ausreißwiderstand herrührt.

Nachfolgend werden Maßnahmen zur Lösung der Problempunkte erörtert. Betrachtet man den vorbeschriebenen negativen Maßeffekt beim Stand der Technik, so handelt es sich bei dem Ausreißen des mittels reaktiven Harzes befestigten Fundamentankers darum, daß, wie in Figur 1 dargestellt, durch scherendes Zerstören der Unebenheiten der mit dem Befestigungsmittel 3 in Kontakt stehenden Seitenwandflächen der Basis 1 dort ein Scherbereich entsteht und in diesem Scherbereich eine Gleitfläche 5 gebildet wird. Auch die hier gebildete Gleitfläche 5 wiederum weist zahlreiche Erhebungen und Vertiefungen auf, wobei durch Zunahme der Belastung diese Erhebungen aufeinander auflaufen, wodurch eine spezifische Druckbeanspruchung entsteht, die eine starke Reibungskraft hervorruft, so daß als Ergebnis diene Reibungskraft den Ausreißwiderstand des Fundamentankers bestimmt.

Nun ist aber der Quotient aus Höhe u der Erhebungen der Gleitfläche 5 durch Radius D/2 des Montagelochs 2 die Größe der hier entstehenden Preßdruckdeformation $\epsilon$; multipliziert man diese mit dem Young'schen Elastizitätsmodul E, so ergibt dies annähernd die Größe der hier auftretenden spezifischen Druckbeanspruchung od. Als Formel ausgedrückt, heißt dies:

$$\sigma d \quad = \quad \epsilon \cdot E$$

$$= \quad \frac{u}{D/2} \cdot E$$

$$= \quad \frac{2\ u\ E}{D} \qquad \ldots \ \ldots \ \ldots \ (1)$$

Darin bedeuten:

$\sigma d$ = spezifische Druckbeanspruchung,

$u$ = Höhe der Erhebungen auf der Gleitfläche,

$\epsilon$ = Preßdruckdeformation,

$E$ = Young'scher Elastizitätsmodul des Fundamentmaterials.

Das Produkt aus spezifischer Druckbeanspruchung $\sigma d$ mal Reibungskoeffizient $\mu$ ist die Reibungskraft $\tau$ je Flächeneinheit, was in folgender Formel ausgedrückt wird:

$$\tau \quad = \quad \sigma d \times \mu$$

$$= \quad \frac{2\ u\ E\ \mu}{D} \qquad \ldots \ \ldots \ \ldots \ (2)$$

Der Wert $u$ in vorstehender Formel 2 hängt von den Eigenschaften des Betons ab, während er vom Durchmesser $D$ des Montagelochs fast überhaupt nicht beeinflußt wird. Infolgedessen ist die Reibungskraft $\tau$ je Flächeneinheit näherungsweise eine umgekehrt proportionale Funktion des Montageloch-Durchmessers $D$. Der experimentelle Beweis hierfür ist die in Figur 2 wiedergegebene Graphik Montageloch-Durchmesser $D$ / Reibungskraft $\tau$ ; Kurve A in dieser Graphik drückt aus, daß die Reibungskraft $\tau$ je Flächeneinheit in annähernd umgekehrt proportionalem Verhältnis zum Montageloch-Durchmesser $D$ steht. In dieser Graphik sind die tatsächlich gemessenen Werte der Reibungskraft $\tau$ je Flächeneinheit standardisiert als relative Werte graphisch wiedergegeben.

Die durch Multiplikation der mit dem Befestigungsmittel 3 in Kontakt stehenden Seitenwandfläche des Fundaments 1 mit der Reibungskraft $\tau$ je Flächeneinheit erhaltene Gesamtreibungskraft bestimmt also den Ausreißwiderstand (Pm). Dieser Ausreißwiderstand Pm wird, die wirksame Montageloch-Tiefe, die etwas geringer ist als die tatsächliche Montageloch-Tiefe, als L' gesetzt, mit folgender Formel ausgedrückt:

$$Pm \quad = \quad \tau \times \pi\ DL'$$

$$= \quad \frac{2\ u\ E\ \mu}{D} \times \pi\ DL' = 2\ \pi\ u\ E\ \mu\ L' \ \ldots \ \ldots \ (3)$$

Nach dem, was durch obige Formel 3 ausgedrückt wird, verschwindet $D$ in dem (Formel-)Teil Fläche, so daß in diesem Fall der Ausreißwiderstand Pm ohne Beziehung zum Montageloch-Durchmesser $D$ steht und eine hauptsächlich von der Montageloch-Tiefe L' abhängige Funktion wird. Die vorbeschriebene Situation wird als negativer Maßeffekt des Montageloch-Durchmessers $D$ für harzbefestigte Fundamentanker erklärt.

Daraus ergibt sich folgendes: Aus den Ergebnissen obiger Untersuchung ist zu ersehen, daß zum Vermeiden der mit Vergrößern der Maße des Fundamentankers verbundenen Abnahme der Reibungskraft, auf der die negativen Maßeffekte beruhen, es sich empfiehlt, ergänzend einen anderen, neuen, spezifische Druckbeanspruchung hervorrufenden Mechanismus einzuführen und den durch den negativen Maßeffekt verminderten Teil der Reibungskraft zu kompensieren. Diese Erfin dung sucht das beschriebene Problem dadurch zu lösen, daß sie als Mechanismus zum Zwecke jener Kompensation das aus reaktivem Harz bestehende Befestigungsmittel in der Zunahme der Belastung entsprechendem, angepaßtem Maße sich verformen läßt, durch an der Oberfläche des Fundamentankers reliefartig hervortretende Teile wie beispielsweise Wülste von Betonformstahl, Außengewinde von Schraubbolzen etc. in zur Achse des Fundamentankers rechtwinkliger Richtung verlaufende Formveränderungen (Fließbewegungen) ableitet und so eine ergänzende spezifische Druckbeanspruchung entstehen läßt, wobei sie in diesem Falle den dem aus reaktivem Harz bestehenden Hauptagens beizumischenden Betonzuschlag als Härtungsprodukt des warmhärtbaren Harzes selbst konstruiert.

Die Funktion der Erfindung wird nunmehr beschrieben. Die Konstruktion dieser Erfindung besteht darin, daß sie als Betonzuschlag das Härtungsprodukt des warmhärtbaren Harzes selbst einsetzt; im Gegensatz zu dem bisherigen Fall, in dem es sich bei dem Betonzuschlag um einen anorganischen Stoff handelte, funktioniert sie in der Weise, daß dann, wenn das Hauptagens gehärtet und der Fundamentanker in dem Montageloch befestigt ist, die Zähigkeit des Befestigungsmittels, d.h. die Zähigkeit des Härtungsprodukts des Harzes einschließlich des Betonzuschlags, in geeignetem Maße reduziert ist, mit Zunahme der am Fundamentanker hängenden Belastung an diesem Härtungsprodukt des Harzes Formveränderungen (Fließbewegungen) in angepaßtem Maße entstehen, diese Deformationen auf reliefartig hervortretende Teile der Oberfläche des Fundamentankers stoßend lokal verhindert und in rechtem Winkel zur achse des Fundamentankers abgeleitet werden, wo die zum Kompensieren des negativen Maßeffekts erforderliche ergänzende spezifische Druckbeanspruchung entsteht.

Nachstehend wird die Erfindung an Hand der Zeichnung erläutert. Es zeigen:

Fig. 1 eine Konstruktion der Befestigung eines Fundamentankers nach bisheriger Technik,

Fig. 2 eine Graphik, welche die Beziehung zwischen spezifischer Druckbeanspruchung und Durchmesser des Montagelochs ausdrückt,

Fig. 3 einen Schnitt, der ein Anwendungsbeispiel dieser Erfindung zeigt,

Fig. 4 einen Schnitt, der ein anderes Durchführungsbeispiel zeigt und

Fig. 5 eine die Funktion erläuternde Zeichnung.

In der Zeichnung wird für das Fundament das Bezugszeichen 1, für das Montageloch das Bezugszeichen 2, für das Befestigungsmittel das Bezugszeichen 3, für den Fundamentanker das Bezugszeichen 4, für die Gleitfläche das Bezugszeichen 5, für das Hauptagens das Bezugszeichen 6, für das Härtungsmittel das Bezugszei chen 8 und für den Betonzuschlag das Bezugszeichen 10 verwendet.

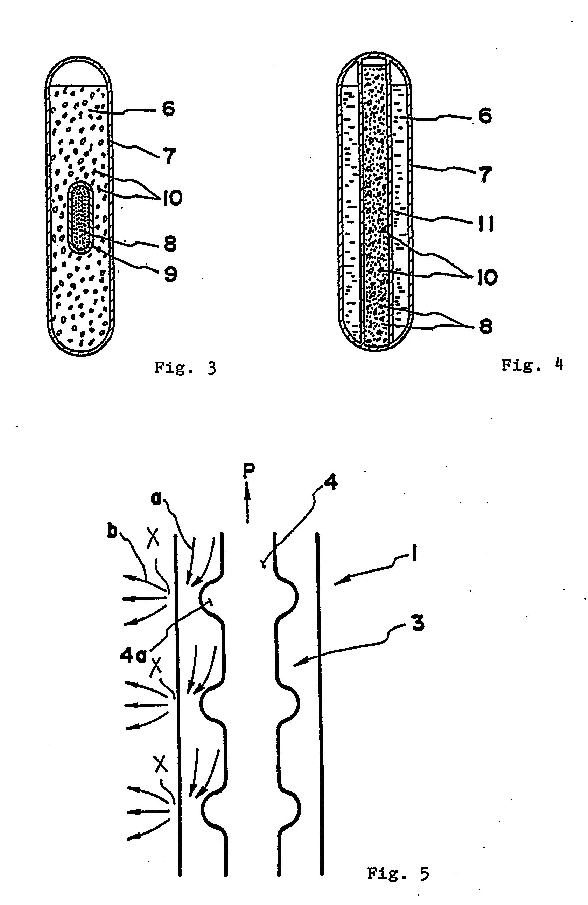

Im Falle Figur 3 besteht das Hauptagens 6 aus warmhärtbarem Harz, wie ungesättigtem Polyesterharz, und ist in einem Kapselbehälter 7 eingeschlossen; in diesem Hauptagens 6 ist das in einem kleinen Kapselbehälter 9 getrennt eingefüllte Härtungsmittel 8 aufgenommen. Weiterhin ist in den Behälter 7 der Betonzuschlag 10 in mit Hauptagens 6 vermischtem Zustand eingefüllt; dieser Betonzuschlag besteht aus dem Härtungsprodukt eines Harzes gleicher Zähigkeit wie derjenigen des Hauptagens' 6, etwa eines warmhärtbaren Harzes wie beispielsweise ungesättigten Polyesterharzes, Epoxyacrylatharzes o. dgl.

Wird langfristige Lagerung für erforderlich gehalten, so wählt man als aus dem Härtungsprodukt warmhärtbaren Harzes bestehenden Betonzuschlag 10 einen solchen genügend hohen Widerstandes gegenüber dem im Hauptagens 6 enthaltenen organischen Lösungsmittel, oder man führt entsprechend Figur 4 den Kapselbehälter 7 als Doppel(wand)konstruktion aus, schließt den Betonzuschlag 10 in einem Innenbehälter 11 ein und trennt ihn so vom Hauptagens 6, wobei man in diesem Falle in dem Innenbehälter 11 das Härtungsmittel 8, das normalerweise ein Pulver ist, auch zusammen mit dem Betonzuschlag 10 einschließen kann.

Wenn man bei Verwendung den o.g. Kapselbehälter 7 in das Montageloch 2 des Fundaments 1 einsteckt und den Fundamentanker 4 mittels Schlagschrauber etc. unter Drehen und Schlagen in das Montageloch 2 eintreibt, zerbricht man den Kapselbehälter 7 mit dem o.g. Befestigungsmittel, zerbricht zugleich im Falle des Ausführungsbeispiels nach Figur 3 den Kapselbehälter 9 mit dem Härtungsmittel, im Falle des Ausführungsbeispiels nach Figur 4 den Innenbehälter 11, verrührt Härtungsmittel 8 mit Hauptagens 6, die vermischt werden, wodurch das Hauptagens-Harz härtet und der Fundamentanker 4 befestigt wird.

Wirkt nun, wie in Figur 5 gezeigt, die Ausreißbelastung P auf den im Fundament 1 befestigten Fundamentanker 4 ein, so treten angesichts des Umstandes, daß das Härtungsprodukt des Harzes den Betonzuschlag bildet, an dem Befestigungsmittel 3, dessen Zähigkeit im Vergleich zu den bisherigen Natur- oder Kunststeinen reduziert ist, Formveränderungen (Fließbewegungen) in angepaßtem Maße auf, welche Deformationen durch an der Oberfläche des Fundamentankers 4 hervortretende Teile 4 a lokal verhindert und, wie mit Pfeilen a dargestellt, in rechtem Winkel zur Achse des Fundamentankers abgeleitet werden, wo die Vektorkomponente der in diese abgeleitete Richtung zielenden Deformation als durch Pfeile b dargestellte spezifische Druckbeanspruchung des Fundaments 1 in Wirkrichtung zu der in den herkömmlichen Befestigungsmitteln 3 begründeten spezifischen Druckbeanspruchung des Fundaments 1 hinzutretend wirksam wird.

In der Abbildung sind der mit X bezeichnete Teil diejenigen Stellen, die man - weil als Folge davon, daß eine hohe spezifische Druckbeanspruchung der Gleitfläche wirksam ist, dort eine große Reibungskraft entsteht - auch Wirkfläche nennen kann, wobei - wie mit den Funktionslinien b der spezifischen Druckbeanspruchung gezeigt - an den in gewissem Maße von der Gleitfläche entfernten Stellen die Orte der spezifischen Druckbeanspruchung im Fundament 1 sich annähernd vereinheitlichen.

Wie oben beschrieben besteht die Konstruktion der Erfindung dieser Anmeldung darin, dadurch, daß man die Zähigkeit des aus der Gesamtheit Harz-Härtungsprodukt einschließlich Betonzuschlag bestehenden Befestigungsmittels 3 reduzierend Formveränderungen in angepaßtem Maße entstehen läßt, eine neue spezifische Druckbeanspruchung zusätzlich hervorzurufen, doch gibt es in dem das Fundament bildenden Beton einen Punkt extremen Drucks, an dem, wenn eine bestimmte spezifische Druckbeanspruchung erreicht ist, ein Sättigungszustand eintritt, über den hinaus der Preßdruck nicht steigt. Dieser Zustand ist in der Graphik der Figur 2 durch Kurve B (annähernde Gerade) dargestellt, die spezifische Druckbeanspruchung σd bleibt ohne Rücksicht auf den Durchmesser D des Montagelochs nahezu konstant. Drückt man nämlich σd = konstant aus, so ergibt sich folglich $\tau = \sigma d \times \mu$ = konstant.

Die Wirkung der erfindungsgemäßen Lehre ergibt sich aus der nachfolgenden Erörterung. Dadurch, daß wie oben beschrieben gemäß der Erfindung bei Befestigungsmaterial zum Befestigen von Fundamentankern, bestehend aus einem Hauptagens aus warmhärtbarem Harz, einem Härtungsmittel und einem Betonzuschlag, dieser Betonzuschlag als Härtungsprodukt des warmhärtbaren Harzes konstruiert ist, werden die Härtungsprodukte des Befestigungsmittels zur Zeit der Befestigung des Fundamentankers sämtlich als Harz-Härtungsprodukte vorgesehen, so daß die Zähigkeit der Befestigungsmittel gegenüber den bisherigen, die anorganische Stoffe als Betonzuschlag verwendeten, reduziert ist. Wirkt folglich auf den Fundamentanker eine Ausreißbelastung ein, so treten am Befestigungsmittel Deformationen (Fließbewegungen) auf, die auf reliefartig hervortretende Stellen des Fundamentankers stoßend im rechten Winkel zur Achse des Fundamentankers abgeleitet werden und eine zusätzliche, hohe spezifische Druckbeanspruchung der Gleitfläche hervorrufen, wodurch es möglich ist, den bisher mit zunehmender Größe des Fundamentankers entstehenden negativen Maßeffekt ausreichend zu kompensieren, mit dem hervorragenden Ergebnis, daß das bisherige Verständnis, wonach der Ausreißwiderstand eine Funktion der Seitenwand-Querschnittsfläche des Montagelochs darstellt, tatsächlich realisiert werden kann.

## Ansprüche

Befestigungsmaterial zum Befestigen von Fundamentankern, bestehend aus einem Hauptagens aus reaktivem warmhärtbarem Harz, einem von diesem Hauptagens getrennt abgefüllten Härtungsmittel und einem Betonzuschlag, dadurch gekennzeichnet, daß dieser Betonzuschlag das Härtungsprodukt des warmhärtbaren Harzes ist.

Fig. 1

Fig. 2